# FASCICULE DE BREVET EUROPEEN

(11) **EP 0 707 197 B1**
(45) Date de publication et mention de la délivrance du brevet: **09.02.2000**
(21) Numéro de dépôt: 95402271.1
(22) Date de dépôt: 11.10.1995
(51) Int. Cl.: G01D 13/04, B41F 15/08, B41M 1/12, B41M 3/00

(54) **Procédé de réalisation de cadran indicateur par sérigraphie**
Verfahren zur Produktion eines Zeigerinstrumentes durch Siebdruck
Process for producing an instrument scale by screen printing

(30) Priorité: 11.10.1994 FR 9412123
(43) Date de publication de la demande: 17.04.1996
(73) Titulaire: MAGNETI MARELLI FRANCE, 92000 Nanterre (FR)
(72) Inventeur: Pavard, Pierre, F-75018 Paris (FR); Jobert, Claude, F-95520 Osny (FR)
(74) Mandataire: Texier, Christian

(56) Documents cités:
- FR-A- 2 566 954
- GB-A- 2 050 104

## Description

La présente invention concerne le domaine des dispositifs indicateurs à cadran.

La présente invention trouve en particulier, mais non exclusivement, application dans le domaine des tableaux de bord de véhicules automobiles.

Les tableaux de bord de véhicules automobiles comprennent généralement un boîtier muni en face avant d'au moins un cadran qui possède diverses indications, telles que des échelles graduées associées à des aiguilles indicatrices, ou encore telles que des symboles associés à des témoins lumineux. Ces indications peuvent par exemple correspondre à des informations de compte-tours, vitesse, niveau de carburant, etc...

Ces indications sont le plus souvent formées de plages translucides éclairées par transparence à partir de l'intérieur du boîtier et/ou de plages réflectives déposées sur la face avant du cadran.

Le cadran est ainsi placé généralement entre les aiguilles précitées et les moyens d'entraînement de celles-ci, composés par exemple d'un logomètre, ou d'un moteur pas à pas ou de tous moyens équivalents, et devant les témoins lumineux précités.

La plupart des cadrans réalisés de nos jours, pour tableaux de bord de véhicules automobiles, sont formés par impression par sérigraphie d'une feuille de matière plastique, généralement du polycarbonate extrudé, notamment une feuille commercialisée sous la dénomination LEXAN ou MAKROFOL.

On pourra trouver par exemple un descriptif d'un procédé de fabrication par sérigraphie d'un cadran pour tableaux de bord de véhicules automobiles dans le document FR-A-2566954.

On a décrit dans ce document un procédé conçu pour garantir une répartition homogène de l'éclairage diffusé par les sources lumineuses disposées sur l'arrière du cadran d'affichage.

A cet effet, le procédé décrit dans le document FR-A-2566954 précité comprend les étapes qui consistent à :
i) agencer les moyens émetteurs lumineux d'un tableau de bord, dans leur position d'utilisation et alimenter ces moyens émetteurs lumineux,
ii) détecter le spectre d'éclairage des moyens émetteurs lumineux dans une direction correspondant, à l'utilisation, à la position du cadran, et à révéler ce spectre à l'aide d'une surface photosensible, et
iii) réaliser un élément correcteur pour l'homogénéisation de l'éclairage, destiné à être intercalé entre les moyens émetteurs lumineux et le cadran, grâce à un processus d'impression au cours duquel un élément dérivé de la surface photosensible constitue un écran d'impression par sérigraphie, de telle sorte que l'élément correcteur présente des zones d'opacité variable selon l'éclairement reçu des moyens émetteurs lumineux.

Selon le document FR-A-2566954 de préférence, au cours de l'étape ii) précitée de détection du spectre d'éclairage, un cadran brut est interposé entre les moyens émetteurs lumineux et la surface photosensible. De plus, au cours de la même étape ii) de détection du spectre d'éclairage, une trame est interposée entre les moyens émetteurs lumineux et la surface photosensible.

Cette technique de réalisation de cadrans de tableaux de bord de véhicules automobiles avec formation d'un élément correcteur par sérigraphie pour homogénéisation de l'éclairage, a déjà rendu de grands services. Cependant, elle ne donne pas totalement satisfaction.

En effet, la superposition du motif indispensable de tramage sur le film de base correspondant au cliché de l'éclairage issu des moyens émetteurs lumineux, avant réalisation de l'élément correcteur, d'une part et de la périodicité du tissu utilisé pour former l'écran de sérigraphie d'autre part, conduit fréquemment à des effets de moirage.

Plus précisément, on utilise généralement de nos jours, pour réaliser ces écrans de sérigraphie, un film tramé dont les points de base sont de forme elliptique de taille variable mais d'entraxe constant, lesdits points constituant la trame du film étant de plus en plus gros pour finir en aplat. La différence essentielle entre les trames à points elliptiques et à points conventionnels carrés apparaît dans les tonalités moyennes d'une reproduction tramée : avec une trame à points elliptiques les points obtenus dans les valeurs à 50% sont allongés, en forme de losanges et jointifs uniquement par deux coins; une trame à points conventionnels carrés produit dans cette zone des carrés, jointifs aux quatre coins. Si ces coins se séparent légèrement à l'impression, ils se séparent néanmoins ensemble, ce qui rompt brusquement la gradation continue dans les tons moyens; par contre les points elliptiques se séparent deux par deux des points voisins, ce qui traduit moins brusquement la légère variation de tonalité qui peut être recherchée.

Bien entendu la présence d'un tel effet de moirage est fort préjudiciable.

Pour tenter de limiter ces effets, l'homme de l'art utilise généralement des techniques rudimentaires. Notamment, on évite les écarts entre nombre de fils du tissu composant l'écran de sérigraphie et le nombre de lignes de trame du film de base, correspondant à des nombres entiers pairs. On applique également une correction angulaire fixe déterminée au préalable pour minimiser cet effet de moirage.

La présente invention a maintenant pour but de perfectionner les moyens antérieurs connus pour la réalisation par sérigraphie de cadran, afin de supprimer totalement tout effet de moirage.

Ce but est atteint selon la présente invention grâce à un procédé tel que défini dans la revendication indépendante annexée.

La présente invention concerne également les écrans de sérigraphie pour la mise en oeuvre de ce procédé, ainsi que les cadrans et tableaux de bord ainsi obtenus.

D'autres caractéristiques, buts et avantages de la présente invention apparaîtront à la lecture de la description détaillée qui va suivre, et en regard du dessin annexé donné à titre d'exemple non limitatif et sur lequel :
- la figure 1 annexée représente schématiquement les diverses étapes d'un procédé conforme à l'invention,
- la figure 2 représente un exemple non limitatif de configuration d'un grain de tramage conforme à la présente invention et
- la figure 3 représente schématiquement un exemple d'agencement relatif de tels grains de tramage.

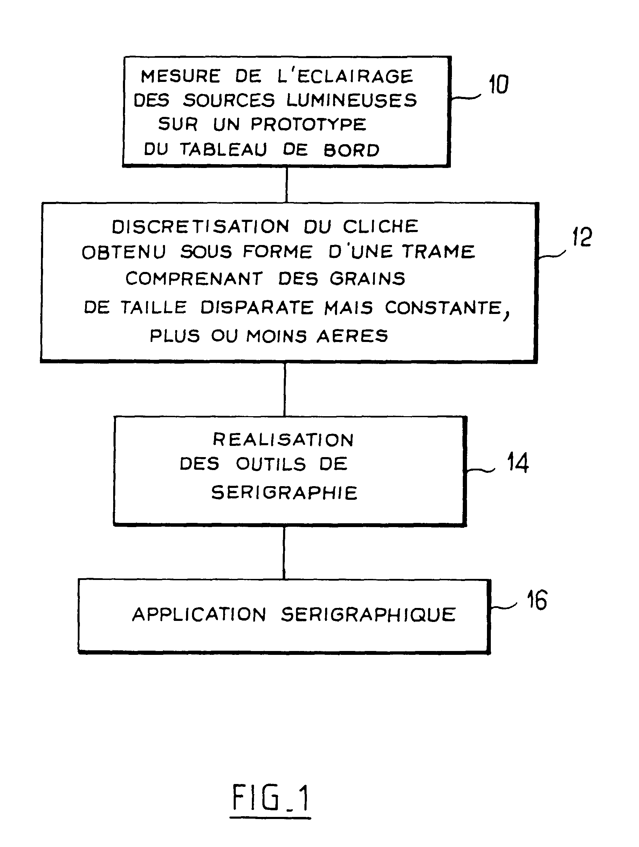

Comme on l'a illustré sur la figure 1 annexée, de préférence, le procédé conforme à la présente invention comprend les étapes qui consistent à :
a) mesurer l'éclairage des sources lumineuses sur un prototype du tableau de bord (étape 10),
b) opérer une discrétisation du cliché obtenu, sous forme d'une trame comprenant des grains de taille disparate mais constante, plus ou moins aérés (étape 12),
c) réaliser des outils de sérigraphie (étape 14) et
d) procéder à une application sérigraphique (étape 16).

Ce procédé conforme à la présente invention est utilisé de préférence pour former par sérigraphie un élément correcteur, homogénéisateur d'éclairage, sur la face arrière d'un cadran révêtu préalablement sur sa face avant de plages indicatrices réflectives et/ou sur sa face arrière de plages indicatrices éclairées par transparence, sachant que ces plages indicatrices réflectives et ces plages indicatrices éclairées par transparence peuvent être réalisées selon toute technique connue, notamment par sérigraphie, sans requérir de tramage et par conséquent sans risquer d'être sujettes à des effets de moirage.

La première étape 10 consiste à mesurer, à l'aide d'une surface photosensible, le spectre d'éclairage des moyens émetteurs lumineux composant un tableau de bord, sur un prototype de tableau de bord équipé de tels moyens émetteurs et de préférence d'un cadran brut. Ce cadran brut peut comporter les différentes plages indicatrices réflectives et les différentes plages indicatrices éclairées par transparence, translucides ou diaphanes, représentant les indications à visualiser, telles qu'échelles graduées ou symboles associés à des témoins lumineux. Cette étape 10 peut être réalisée pour l'essentiel conformément à l'enseignement du document FR-A-2566954. Elle permet notamment, en mesurant directement le spectre d'éclairage sur un prototype, d'apporter toute correction utile sur l'écran de sérigraphie pour obtenir ultérieurement, à l'utilisation du tableau de bord, un éclairage homogène. Cette étape 10 assimilable à une radiographie d'un prototype du tableau de bord peut consister en un cliché photographique du tableau de bord. Sur le premier négatif de ce cliché, les plages éclairées par les sources lumineuses du prototype de tableau de bord apparaissent sombres.

La seconde étape 12 du procédé conforme à l'invention consiste ensuite à réaliser une discrétisation à partir de la surface photosensible ou négatif précité, sous forme d'une trame comprenant des grains de taille constante, mais plus ou moins aérés ou amalgamés en fonction du pourcentage d'éclairage requis. Ainsi l'étape de discrétisation 12 transforme les évolutions continues de dégradé de la surface photosensible ou négatif obtenu à l'étape 10, sous forme d'éléments discrets de taille constante mais d'entraxe variable en fonction du pourcentage d'éclairage enregistré sur ladite surface photosensible ou négatif à l'étape 10.

Par rapport à la technique antérieure, cette trame possède par conséquent non pas des points de taille variable et présentant un entraxe constant, mais des grains présentant au contraire une taille constante et un entraxe variable en fonction du pourcentage requis.

La discrétisation sous forme de grains de taille constante, mais plus ou moins aérés ou amalgamés peut être obtenue par exemple à l'aide de systèmes de balayage et d'analyse analogique disponibles de nos jours.

De tels dispositifs de balayage et d'analyse sont par exemple proposés de nos jours par les Sociétés LINOTYPE-HELL, CROSFIELD et KODAK.

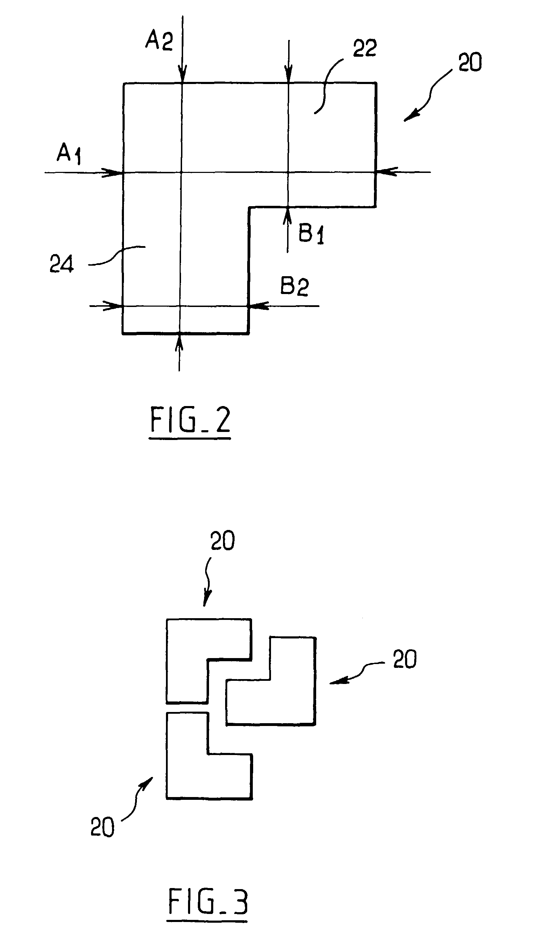

Bien entendu, la géométrie et les dimensions des grains composants la trame aprés discrétisation peuvent varier d'une application à l'autre. On décrira par la suite un mode de réalisation avantageux et non limitatif de ces grains en regard des figures 2 et 3.

Une fois cette discrétisation obtenue, on peut procéder, de façon classique en soi, à la réalisation d'un écran de sérigraphie, au cours de l'étape 14. Le but de cette étape 14 est de réaliser un écran de sérigraphie dont les plages à forte densité d'ouvertures correspondent aux plages de plus fort éclairement par les sources lumineuses du prototype du tableau de bord, pour permettre par dépôt ultérieur au cours de l'étape de sérigraphie d'atténuer ces plages de fort éclairage et par conséquent d'aboutir à une homogénéité d'éclairage.

Lorsque l'étape de discrétisation s'accompagne d'une inversion de tonalité clair/sombre et que l'émulsion utilisée pour réaliser l'écran de sérigraphie est de type positif (c'est à dire que les zones insolées de cette émulsion ne sont pas éliminées au cours de l'étape de dépouillement alors que les plages non insolées le sont), il est nécessaire de procéder au préalable à un nouveau cliché du résultat de la discrétisation, pour obtenir un simili, afin de rétablir sur ce dernier les plages de fort éclairage sous forme de plages sombres. Ce nouveau cliché n'est cependant pas nécessaire avec des émulsions de type négatif même si l'étape de discrétisation provoque une inversion de tonalité.

En revanche lorsque l'étape de discrétisation ne s'accompagne pas d'une telle inversion de tonalité clair/sombre, le résultat de la discrétisation peut être utilisé directement en tant que simili avec des émulsions de type positif et doit au contraire faire l'objet d'un nouveau cliché pour obtenir un simili adéquat par inversion, lorsque des émulsions de type négatif sont utilisées.

L'étape 14 consiste essentiellement à :
i) superposer le simili obtenu selon les modalités précitées à un tissu muni de façon classique en soi d'une émulsion photosensible adéquate vierge,
ii) procéder à l'insolation de l'émulsion à travers le simili,
iii) puis dépouiller le tissu pour éliminer localement l'émulsion, par exemple à l'eau, à l'aide d'un produit adéquat dépendant de la nature de l'émulsion utilisée.

Le tissu obtenu possède alors des zones de forte densité d'ouvertures qui correspondent aux zones de fort éclairage par les sources lumineuses du prototype de tableau de bord.

Il reste alors à placer ce tissu sur un cadre de sérigraphie pour former un écran de sérigraphie et procéder de façon connue en soi à l'étape de sérigraphie 16, à l'aide de cet écran, sur un cadran brut.

Cette étape est schématisée sous la référence 16 sur la figure 1. Comme indiqué précédemment, on utilise, de préférence, comme cadran brut, des supports de matière plastique extrudée transparente commercialisés par exemple sous la dénomination LEXAN ou MAKROFOL.

Par ailleurs cette étape de sérigraphie consiste de préférence à déposer un revêtement d'homogénéisation d'éclairage sur la face arrière d'un cadran préalablement muni sur sa face avant de plages indicatrices réflectives et/ou par exemple sur sa face arrière de plages indicatrices transparentes. En variante ces plages indicatrices réflectives et/ou plages indicatrices transparentes peuvent être déposées après le révêtement d'homogénéisation.

Le dépôt du revêtement d'homogénéisation est de préférence opéré à l'aide d'encres sans solvant sensibles à un rayonnement spécifique, par exemple des encres sensibles aux ultra-violets, pour éviter d'obturer l'écran de sérigraphie.

Le procédé conforme à la présente invention offre de nombreux avantages par rapport aux techniques de sérigraphie antérieures connues.

Tout d'abord le procédé conforme à la présente invention permet de supprimer totalement les effets de moirage.

De plus, le procédé conforme à la présente invention supprime la nécessité de respecter scrupuleusement l'équerrage des fils du tissu tendu sur le cadre de sérigraphie, comme cela était nécessaire jusqu'ici, notamment lorsque l'on imprime par sérigraphie des feuilles comprenant différents motifs.

Le procédé conforme à la présente invention permet également de supprimer la nécessité de respecter scrupuleusement les angles relatifs de présentation des écrans de sérigraphie successifs associés respectivement à diverses couleurs.

On a représenté sur la figure 2, un exemple préférentiel mais non limitatif de configuration de grain de tramage 20 conforme à la présente invention, en forme générale de "L", utilisé pour la discrétisation à l'étape 10.

Ce grain 20 est formé de deux ailes 22, 24 rectilignes et orthogonales entre elles.

De préférence les deux ailes 22 et 24 possédent des longueurs A1 et A2 identiques et des largeurs B1 et B2 identiques, les largeurs B1 et B2 étant par ailleurs de l'ordre de la moitié des longueurs A1 et A2.

En outre selon l'invention la dimension des longueurs A1 et A2 des grains est avantageusement de l'ordre de 0,3 à 0,6mm.

Ces grains 20 peuvent faire l'objet de diverses orientations comme on le voit à l'examen de la figure 3.

Cependant leurs bords longitudinaux restent de préférence parallèles entre eux.

Bien entendu la présente invention n'est pas limitée au mode de réalisation particulier qui vient d'être décrit mais s'étend à toute variante conforme à son esprit.

Ainsi par exemple on peut prévoir que les grains réalisés sur l'écran ne soient pas de la même taille sur la totalité de la surface de cet écran, mais soient simplement de même taille sur des plages prédéfinies de celui-ci, la taille des grains pouvant varier d'une plage à l'autre. De même l'écran de sérigraphie conforme à la présente invention, possédant une trame à grains de taille constante et d'entraxe variable en fonction du pourcentage requis, pourra n'être utilisé que pour couvrir une partie seulement du cadran.

## Revendications

1. Procédé de fabrication par sérigraphie d'un cadran de dispositif indicateur comprenant l'application sérigraphique d'un revêtement, sur un support formant cadran, à travers un écran de sérigraphie caractérisé par le fait que l'écran de sérigraphie posséde une trame à grains (20) de taille constante et d'entraxe variable en fonction du pourcentage requis entre les surfaces du support revêtues et les surfaces de ce support non revêtues.

2. Procédé selon la revendication 1, caractérisé par le fait qu'il comprend les étapes qui consistent à :
a) mesurer l'éclairage des sources lumineuses destinées à être associées au cadran, sur un prototype de cadran de dispositif indicateur (étape 10),
b) opérer une discrétisation du cliché obtenu, sous forme d'une trame comprenant des grains de taille disparate mais constante, (étape 12),
c) réaliser des outils de sérigraphie à l'aide du résultat de cette discrétisation (étape 14) et
d) procéder à une application sérigraphique à l'aide des outils de sérigraphie (étape 16).

3. Procédé selon l'une des revendications 1 ou 2, caractérisé par le fait qu'il consiste à former par sérigraphie un élément correcteur, homogénéisateur d'éclairage, sur la face arrière d'un cadran révêtu sur sa face avant de plages indicatrices réflectives et/ou sur sa face arrière de plages indicatrices éclairées par transparence.

4. Procédé selon la revendication 2, caractérisé par le fait que la première étape (10) consiste à prendre un cliché photographique d'un prototype.

5. Procédé selon l'une des revendications 2 ou 4, caractérisé par le fait que la seconde étape (12) consiste à réaliser une discrétisation à l'aide d'un système de balayage et d'analyse analogique.

6. Procédé selon l'une des revendications 2 à 5, caractérisé par le fait que les plages à forte densité d'ouvertures de l'écran de sérigraphie correspondent aux plages de plus fort éclairement par les sources lumineuses d'un prototype, pour permettre par dépôt au cours de l'étape de sérigraphie (étape 16) d'atténuer ces plages de fort éclairage et par conséquent d'aboutir à une homogénéité d'éclairage.

7. Procédé selon la revendication 2, caractérisé par le fait qu'il comprend l'étape intermédiaire qui consiste à procéder à un nouveau cliché du résultat de la discrétisation, pour obtenir un simili avant de procéder à la réalisation de l'écran de sérigraphie.

8. Procédé selon l'une des revendications 2 à 7, caractérisé par le fait que l'application sérigraphique (16) est réalisée à l'aide d'encres sans solvant sensibles à un rayonnement spécifique, par exemple des encres sensibles aux ultra-violets, pour éviter d'obturer l'écran de sérigraphie.

9. Procédé selon l'une des revendications 1 à 8, caractérisé par le fait que les grains du tramage (20) sont en forme générale de "L".

10. Procédé selon la revendication 9, caractérisé par le fait que les grains (20) sont formés de deux ailes (22, 24) rectilignes et orthogonales entre elles.

11. Procédé selon la revendication 10, caractérisé par le fait que les deux ailes (22, 24) possèdent des longueurs (A1, A2) identiques.

12. Procédé selon l'une des revendications 10 ou 11, caractérisé par le fait que les deux ailes (22, 24) possédent des largeurs (B1, B2) identiques.

13. Procédé selon l'une des revendications 10 à 12, caractérisé par le fait que les largeurs (B1, B2) des deux ailes (22, 24) sont de l'ordre de la moitié de leur longueur (A1, A2).

14. Procédé selon l'une des revendication 1 à 13, caractérisé par le fait que la taille des grains (20) est de l'ordre de 0,3 à 0,6mm.

15. Procédé selon l'une des revendications 1 à 14, caractérisé par le fait que les grains (20) sont placés selon diverses orientations avec leurs bords longitudinaux parallèles.

16. Procédé selon la revendication 1 à 15, caractérisé par le fait que les grains (20) ne sont pas de la même taille sur la totalité de la surface du cadran, mais sont de même taille sur des plages prédéfinies de celui-ci, la taille des grains (20) pouvant varier d'une plage à l'autre.

17. Ecran de sérigraphie pour la mise en oeuvre du procédé conforme à l'une des revendications 1 à 16, caractérisé par le fait qu'il possède une trame à grains (20) de taille constante et d'entraxe variable en fonction du pourcentage requis entre les surfaces du support de sérigraphie à revêtir et les surfaces de ce support ne devant pas être revêtues.

18. Ecran selon la revendications 17, caractérisé par le fait que les grains du tramage (20) sont en forme générale de "L".

19. Ecran selon la revendication 18, caractérisé par le fait que les grains (20) sont formés de deux ailes (22, 24) rectilignes et orthogonales entre elles.

20. Ecran selon la revendication 19, caractérisé par le fait que les deux ailes (22, 24) possédent des longueurs (A1, A2) identiques.

21. Ecran selon l'une des revendications 19 ou 20, caractérisé par le fait que les deux ailes (22, 24) possédent des largeurs (B1, B2) identiques.

22. Ecran selon l'une des revendications 19 à 21, caractérisé par le fait que les largeurs (B1, B2) des deux ailes (22, 24) sont de l'ordre de la moitié de leur longueur (A1, A2).

23. Ecran selon l'une des revendication 17 à 22, caractérisé par le fait que la taille des grains (20) est de l'ordre de 0,3 à 0,6mm.

24. Ecran selon l'une des revendications 17 à 23, caractérisé par le fait que les grains (20) sont placés selon diverses orientations avec leurs bords longitudinaux parallèles.

25. Ecran selon l'une des revendication 17 à 24, caractérisé par le fait que les grains (20) ne sont pas de la même taille sur la totalité de la surface de l'écran, mais sont de même taille sur des plages prédéfinies de celui-ci, la taille des grains (20) pouvant varier d'une plage à l'autre.

26. Cadran obtenu par la mise en oeuvre du procédé conforme à l'une des revendications 1 à 16.

27. Cadran selon la revendication 26, caractérisé par le fait qu'il est conçu pour un tableau de bord de véhicule automobile.

## Claims

1. A method of manufacturing a dial for an indicator device by silk-screen printing in which a coating is applied to a dial-forming support through a silk screen, the method being characterized by the fact that the silk screen possesses an array of dots (20) of constant size and of spacing that varies as a function of the percentage required between the coated and the uncoated areas of the support.

2. A method according to claim 1, characterized by the fact that it comprises the steps which consist in:
a) measuring the illumination from light sources that are to be associated with the dial on a prototype of the dial of the indicator device (step 10);
b) discretizing the resulting image, in the form of an array comprising dots of disparate but constant size (step 12);
c) making silk-screen printing tools using the result of this discretizing operation (step 14); and
d) performing silk-screen printing using the silk-screen printing tools (step 16).

3. A method according to claim 1 or 2, characterized by the fact that it consists in using silk-screen printing to form a correcting element for making lighting more uniform on the rear face of a dial coated on its front face with reflective indicating areas and/or on its rear face with indicating areas illuminated by transparency.

4. A method according to claim 2, characterized by the fact that the first step (10) consists in taking a photographic image of a prototype.

5. A method according to claim 2 or 4, characterized by the fact that the second step (12) consists in performing discretization with an analog scanning and analysis system.

6. A method according to any one of claims 2 to 5, characterized by the fact that the areas having a high density of openings in the silk screen correspond to areas that are highly illuminated by the light sources of a prototype so that the deposition performed during the silk-screen printing step (step 16) attenuates said areas of high illumination, consequently leading to illumination that is uniform.

7. A method according to claim 2, characterized by the fact that it includes an intermediate step which consists in taking a new image of the result of the discretization so as to obtain a half-tone prior to making the silk screen.

8. A method according to any one of claims 2 to 7, characterized by the fact that the silk-screen printing (16) is applied using inks without any solvent that are sensitive to specific radiation, e.g. inks sensitive to ultraviolet radiation, so as to avoid occluding the silk screen.

9. A method according to any one of claims 1 to 8, characterized by the fact that the dots of the array (20) are generally L-shaped.

10. A method according to claim 9, characterized by the fact that the dots (20) are formed by two rectilinear limbs (22, 24) that are mutually orthogonal.

11. A method according to claim 10, characterized by the fact that both limbs (22, 24) are identical in length (A1, A2).

12. A method according to claim 10 or 11, characterized by the fact that both limbs (22, 24) are of identical width (B1, B2).

13. A method according to any one of claims 10 to 12, characterized by the fact that the widths (B1, B2) of the two limbs (22, 24) are about half the lengths (A1, A2) thereof.

14. A method according to any one of claims 1 to 13, characterized by the fact that the size of the dots (20) is about 0.3 mm to 0.6 mm.

15. A method according to any one of claims 1 to 14, characterized by the fact that the dots (20) are placed in various orientations with their longitudinal edges parallel.

16. A method according to any one of claims 1 to 15, characterized by the fact that the dots (20) are not of the same size over all of the area of the dial, but are of the same size over predefined areas thereof, with dot size (20) being capable of varying from one area to another.

17. A silk screen for implementing the method according to any one of claims 1 to 16, characterized by the fact that it possesses an array of dots (20) of constant size and of varying spacing as a function of the percentage required between the coated and the uncoated areas of the print medium.

18. A screen according to claim 17, characterized by the fact that the dots of the array (20) are generally L-shaped.

19. A screen according to claim 18, characterized by the fact that the dots (20) are in the form of two rectilinear limbs (22, 24) that are mutually orthogonal.

20. A screen according to claim 19, characterized by the fact that both limbs (22, 24) are identical in length (A1, A2).

21. A screen according to claim 19 or 20, characterized by the fact that both limbs (22, 24) are identical in width (B1, B2).

22. A screen according to any one of claims 19 to 21, characterized by the fact that the widths (B1, B2) of the two limbs (22, 24) are about half the lengths (A1, A2) thereof.

23. A screen according to any one of claims 17 to 22, characterized by the fact that the size of the dots (20) is about 0.3 mm to 0.6 mm.

24. A screen according to any one of claims 17 to 23, characterized by the fact that the dots (20) are placed in various orientations with their longitudinal edges parallel.

25. A screen according to any one of claims 17 to 24, characterized by the fact that the dots (20) are not of the same size over the entire area of the screen, but are of the same size over predefined areas thereof, with the size of the dots (20) being capable of varying from one area to another.

26. A dial obtained by implementing the method according to any one of claims 1 to 16.

27. A dial according to claim 26, characterized by the fact that it is designed for the dashboard of a motor vehicle.

## Patentansprüche

1. Verfahren zur Herstellung einer Skala einer Anzeigenvorrichtung, welches das Aufbringen einer Beschichtung durch Siebdruck auf ein skalabildendes Trägermaterial durch eine Siebdruckschablone umfaßt, dadurch gekennzeichnet, daß die Siebdruckschablone ein Raster mit Körnern (20) von konstanter Größe und einem Achsabstand aufweist, welcher abhängig von dem erforderlichen Prozentsatz zwischen den beschichteten Flächen des Trägermaterials und den nicht beschichteten Flächen dieses Trägermaterials variabel ist.

2. Verfahren gemäß Anspruch 1, dadurch gekennzeichnet, daß es die Schritte umfaßt, welche daraus bestehen:
a) die Lichtmenge der Lichtquellen, welche dafür bestimmt sind, mit der Skala verbunden zu werden, an einem Prototyp der Skala der Anzeigenvorrichtung zu messen (Schritt 10),
b) eine Aufgliederung der erhaltenen Aufnahme in Form eines Rasters durchzuführen, welches Körner von disparater, aber konstanter Größe aufweist (Schritt 12),
c) Siebdruckvorrichtungen mit Hilfe des Ergebnisses dieser Aufgliederung herzustellen (Schritt 14) und
d) einen Siebdruck mit Hilfe der Siebdruckvorrichtungen aufzubringen (Schritt 16).

3. Verfahren gemäß einem der Ansprüche 1 oder 2, dadurch gekennzeichnet, daß es daraus besteht, durch Siebdruck ein Korrekturelement zur Homogenisierung der Beleuchtung auf der Rückseite einer Anzeigenskala auszubilden, welche auf ihrer Vorderseite mit reflektierenden Anzeigebereichen und/oder auf ihrer Rückseite mit durch Transparenz beleuchtete Anzeigebereiche versehen ist.

4. Verfahren gemäß Anspruch 2, daß der erste Schritt (10) daraus besteht, eine photographische Aufnahme von einem Prototypen zu machen.

5. Verfahren gemäß einem der Ansprüche 2 oder 4, dadurch gekennzeichnet, daß der zweite Schritt (12) daraus besteht, eine Aufgliederung mit Hilfe eines Abtast- und Analogbildzerlegungssystems vorzunehmen.

6. Verfahren gemäß einem der Ansprüche 2 bis 5, dadurch gekennzeichnet, daß die Bereiche mit hoher Öffhungsdichte der Siebdruckschablone den Bereichen entsprechen, welche von den Lichtquellen eines Prototyps am stärksten beleuchtet werden, um durch Aufbringen im Verlauf des Siebdruckschrittes (Schritt 16) zu ermöglichen, diese Bereiche der starken Beleuchtung abzuschwächen und folglich zu einer Beleuchtungshomogenität zu gelangen.

7. Verfahren gemäß Anspruch 2, dadurch gekennzeichnet, daß es den Zwischenschritt umfaßt, welcher daraus besteht, eine neue Aufnahme des Ergebnisses der Aufgliederung zu machen, um eine Nachbildung zu erhalten, bevor die Herstellung der Siebdruckschablone vorgenommen wird.

8. Verfahren gemäß einem der Ansprüche 2 bis 7, dadurch gekennzeichnet, daß das Siebdruckaufbringen (16) mit Hilfe von lösemittelfreien Druckfarben durchgeführt wird, welche empfindlich gegenüber einer speziellen Strahlung sind, beispielsweise Druckfarben, welche empfindlich gegenüber Ultraviolettstrahlung sind, um zu vermeiden die Siebdruckschablone zu verstopfen.

9. Verfahren gemäß einem der Ansprüche 1 bis 8, dadurch gekennzeichnet, daß die Rasterkörner (20) die allgemeine Form eines "L" aufweisen.

10. Verfahren gemäß Anspruch 9, dadurch gekennzeichnet, daß die Körner (20) von zwei geradlinigen und zueinander rechtwinkligen Flügeln (22, 24) gebildet sind.

11. Verfahren gemäß Anspruch 10, dadurch gekennzeichnet, daß die beiden Flügel (22, 24) identische Längen (A1, A2) besitzen.

12. Verfahren gemäß einem der Ansprüche 10 oder 11, dadurch gekennzeichnet, daß die beiden Flügel (22, 24) identische Breiten (B1, B2) besitzen.

13. Verfahren gemäß einem der Ansprüche 10 bis 12, dadurch gekennzeichnet, daß die Breiten (B1, B2) der beiden Flügel (22, 24) in der Größenordnung der Hälfte ihrer Länge (A1, A2) liegen.

14. Verfahren gemäß einem der Ansprüche 1 bis 13, dadurch gekennzeichnet, daß die Größe der Körner (20) in der Größenordnung von 0,3 bis 0,6 mm liegt.

15. Verfahren gemäß einem der Ansprüche 1 bis 14, dadurch gekennzeichnet, daß die Körner (20) gemäß verschiedenen Ausrichtungen angeordnet sind, wobei ihre Längskanten zueinander parallel liegen.

16. Verfahren gemäß Anspruch 1 bis 15, dadurch gekennzeichnet, daß die Körner (20) nicht über die gesamte Fläche der Anzeigenskala dieselbe Größe haben, sondern daß sie über zuvor definierte Bereiche von dieser dieselbe Größe aufweisen, wobei die Größe der Körner (20) von einem Bereich zum anderen variieren kann.

17. Siebdruckschablone für die Durchführung des Verfahrens gemäß einem der Ansprüche 1 bis 16, dadurch gekennzeichnet, daß sie ein Raster mit Körnern (20) von konstanter Größe und einem Achsabstand aufweist, welcher abhängig von dem erforderlichen Prozentsatz zwischen den zu beschichtenden Flächen des Siebdruckträgermaterials und den nicht zu beschichtenden Flächen dieses Trägermaterials variabel ist.

18. Schablone gemäß Anspruch 17, dadurch gekennzeichnet, daß die Körner des Rasters (20) die allgemeine Form eines "L" haben.

19. Schablone gemäß Anspruch 18, dadurch gekennzeichnet, daß die Körner (20) von zwei geradlinigen und zueinander rechtwinkligen Flügeln (22, 24) gebildet sind.

20. Schablone gemäß Anspruch 19, dadurch gekennzeichnet, daß die beiden Flügel (22, 24) identische Längen (A1, A2) besitzen.

21. Schablone gemäß einem der Ansprüche 19 oder 20, dadurch gekennzeichnet, daß die beiden Flügel (22, 24) identische Breiten (B1, B2) besitzen

22. Schablone gemäß einem der Ansprüche 19 bis 21, dadurch gekennzeichnet, daß die Breiten (B1, B2) der beiden Flügel (22, 24) in der Größenordnung der Hälfte ihrer Länge (A1, A2) liegen.

23. Schablone gemäß einem der Ansprüche 17 bis 22, dadurch gekennzeichnet, daß die Größe der Körner (20) in der Größenordnung von 0,3 bis 0,6 mm liegt.

24. Schablone gemäß einem der Ansprüche 17 bis 23, dadurch gekennzeichnet, daß die Körner (20) gemäß verschiedenen Ausrichtungen angeordnet sind, wobei ihre Längskanten zueinander parallel liegen.

25. Schablone gemäß einem der Ansprüche 17 bis 24, dadurch gekennzeichnet, daß die Körner (20) nicht über die gesamte Fläche der Schablone dieselbe Größe haben, sondern daß sie über zuvor definierte Bereiche von dieser dieselbe Größe aufweisen, wobei die Größe der Körner (20) von einem Bereich zum anderen variieren kann.

26. Anzeigenskala, welche mit der Durchführung des Verfahrens gemäß einem der Ansprüche 1 bis 16 erhalten wird.

27. Anzeigenskala gemäß Anspruch 26, dadurch gekennzeichnet, daß sie für ein Armaturenbrett in Kraftfahrzeugen ausgebildet ist.
